# DEMANDE DE BREVET EUROPEEN

(11) **EP 2 632 025 A1**
(43) Date de publication de la demande: **28.08.2013**
(21) Numéro de dépôt: 13155701.9
(22) Date de dépôt: 19.02.2013
(51) Int. Cl.: H02K 1/27, H02K 7/18

(54) **Système de fixation d'éléments magnétiques dans une machine électrique à aimants permanents.**

(30) Priorité: 21.02.2012 FR 1251574
(71) Demandeur: ALSTOM Renewable Technologies, 38100 Grenoble (FR)
(72) Inventeur: Bats, Guillaume, 09000 Foix (FR); Duque, Lina, 09000 Foix (FR); Ardley, Glenn Henry, 5405 Baden-Daettwill (CH); Le Lez, Sébastien, 44000 Nantes (FR); Boivent, Erwann, 44360 Saint-Etienne de Montluc (FR)
(74) Mandataire: Pesce, Michele

(57) **Abrégé**

L'invention concerne un système de fixation d'éléments magnétiques (12) dans une machine électrique à aimants permanents comportant au moins un stator et au moins un rotor (10) garni d'une pluralité d'éléments magnétiques (12), un élément magnétique (12) comportant au moins un aimant permanent (28). Le système de fixation comporte, pour la fixation d'un élément magnétique (12) au rotor (10), un dispositif de fixation (14) apte à être positionné en contact avec une portion de l'élément magnétique (12) et à être fixé au rotor au moyen d'au moins un élément mécanique de fixation (24), de manière à fixer ledit élément magnétique (12) au rotor (10) lorsque ledit élément mécanique de fixation (24) est en prise avec le rotor (10).

## Description

La présente invention concerne un système de fixation d'éléments magnétiques dans une machine électrique à aimants permanents comportant au moins un stator et au moins un rotor garni d'une pluralité d'éléments magnétiques, un élément magnétique comportant au moins un aimant permanent.

L'invention se situe plus généralement dans le domaine de la conversion d'énergie par des machines électriques tournantes à aimants permanents. Elle trouve une application particulière notamment dans les domaines hydrolien et éolien.

Une telle machine électrique à aimants permanents est par exemple un générateur ou un moteur.

Dans ce type d'application, des machines électriques de très grande taille sont souvent nécessaires.

Deux types de machines électriques à aimants permanents sont connus, les machines à flux axial et les machines à flux radial. D'autres technologies existent mais peu répandues à l'échelle industrielle comme la topologie de machine à flux transverse.

Une machine à aimants permanents à flux axial comporte un ou plusieurs stators circulaires. Dans le cas d'une configuration à deux stators et un rotor médian, le rotor, en forme de disque, est positionné entre les stators et comprend un grand nombre d'éléments magnétiques comportant des aimants de forte puissance, éventuellement encapsulés dans une capsule de protection, positionnés de façon radiale sur le rotor.

Une machine à aimants permanents à flux radial comporte classiquement un stator cylindrique monté de façon concentrique à l'extérieur ou à l'intérieur d'un rotor cylindrique. Des aimants permanents, éventuellement placés dans une capsule de protection, sont positionnés sur le rotor à des emplacements prévus à cet effet.

Qu'il s'agisse d'une machine à flux axial ou à flux radial, les éléments magnétiques peuvent être soumis aux efforts de fatigue induits par la rotation et la transmission de couple, à l'usure et à la corrosion (si application immergée) lors du fonctionnement de la machine électrique. Il est important de bien fixer chaque élément magnétique aussi solidement que possible, afin d'assurer un bon fonctionnement et d'éviter une usure importante ou un desserrage des éléments, dû aux efforts de fatigue et aux vibrations lors de la rotation du rotor.

Un système classique connu consiste à fixer chaque élément magnétique à la machine électrique, par exemple sur le rotor, par collage, en utilisant des résines époxy. Cependant, un tel système de fixation présente un risque de décollage important, notamment dû à l'impact de l'eau de mer sur la résistance de la résine en fonctionnement immergé.

Un autre système de fixation classique connu consiste à assembler un ou plusieurs éléments de fixation, par exemple des vis, directement sur l'élément magnétique, afin de fixer celui-ci sur le rotor ou le stator. Dans le cas où l'élément magnétique est simplement un aimant sans capsule de protection, une telle solution implique un usinage directement sur la matière magnétique, et le risque d'endommager cette matière est élevé. De plus, dans le cas d'une fixation directe de chaque élément magnétique via un élément mécanique de fixation, l'élément magnétique récupère les efforts de fixation et le résultat est qu'il est fragilisé et risque d'être endommagé ou desserré à terme, la matière magnétique étant très fragile. Dans le cas où l'élément magnétique est composé d'un ou plusieurs aimants encapsulés dans une capsule de protection, une telle capsule doit être fabriquée selon des contraintes de fabrication très précises afin d'assurer une bonne fixation sans jeu important.

Afin de remédier aux inconvénients précités, l'invention propose un système de fixation d'éléments magnétiques dans une machine électrique à aimants permanents comportant au moins un stator et au moins un rotor garni d'une pluralité d'éléments magnétiques, un élément magnétique comportant au moins un aimant permanent.

Le système de fixation comporte, pour la fixation d'un élément magnétique au rotor, un dispositif de fixation apte à être positionné en contact avec une portion de l'élément magnétique et à être fixé au rotor au moyen d'au moins un élément mécanique de fixation, de manière à fixer ledit élément magnétique au rotor lorsque ledit élément mécanique de fixation est en prise avec le rotor.

Avantageusement, le dispositif de fixation supporte les efforts de fixation, l'élément magnétique à aimants permanents étant protégé, car il n'est pas lié directement au rotor. Seul le dispositif de fixation a besoin d'avoir une interface mécanique précise avec le rotor, c'est à dire des surfaces de contact avec des tolérances précises. Les contraintes et les coûts de fabrication des éléments magnétiques sont ainsi diminués.

Le système de fixation d'éléments magnétiques dans une machine électrique à aimants permanents selon l'invention peut également présenter une ou plusieurs des caractéristiques ci-dessous, prises indépendamment ou en combinaison :
- ledit dispositif de fixation comporte au moins un trou apte à recevoir un dit élément mécanique de fixation,
- ledit élément mécanique de fixation est une vis ou une goupille, apte à être insérée dans ledit dispositif de fixation en prise avec le rotor,
- ledit élément magnétique comporte une capsule de protection à l'intérieur de laquelle est disposé au moins un aimant permanent,
- ladite capsule de protection comporte en outre un matériau de remplissage apte à fixer le ou les aimants permanents,
- lorsque ladite machine électrique est une machine à flux axial, ledit élément magnétique comporte en outre un élément de fermeture apte à sceller ladite capsule de protection,
- ledit dispositif de fixation est positionné en contact avec une surface dudit élément de fermeture, et ledit dispositif de fixation est en outre fixé audit élément de fermeture par au moins un autre élément mécanique de fixation,
- ledit dispositif de fixation est formé de manière à ce qu'une de ses faces soit apte à être positionnée au contact d'au moins une portion d'une face de l'élément magnétique,
- il comporte en outre un élément mécanique complémentaire de fixation, fixé sur une autre face de l'élément magnétique et apte à être positionné en prise avec le rotor,
- ledit dispositif de fixation est une pièce métallique usinée, et
- ledit dispositif de fixation est en métal non magnétique ou en matériau composite.

D'autres caractéristiques et avantages de l'invention ressortiront de la description qui en est donnée ci-dessous, à titre indicatif et nullement limitatif, en référence aux figures annexées, parmi lesquelles :
- la figure 1 est une vue de dessus d'un rotor d'une machine électrique à flux axial selon un mode de réalisation ;
- la figure 2 est une vue en perspective d'un dispositif de fixation positionné sur un élément magnétique selon un mode de réalisation ;
- la figure 3 est une vue en coupe longitudinale du dispositif de fixation positionné sur un élément magnétique de la figure 2 ;
- la figure 4 est une vue éclatée d'une machine électrique à flux radial, et
- la figure 5 est une vue en perspective d'un dispositif de fixation d'éléments magnétiques selon un autre mode de réalisation de l'invention.

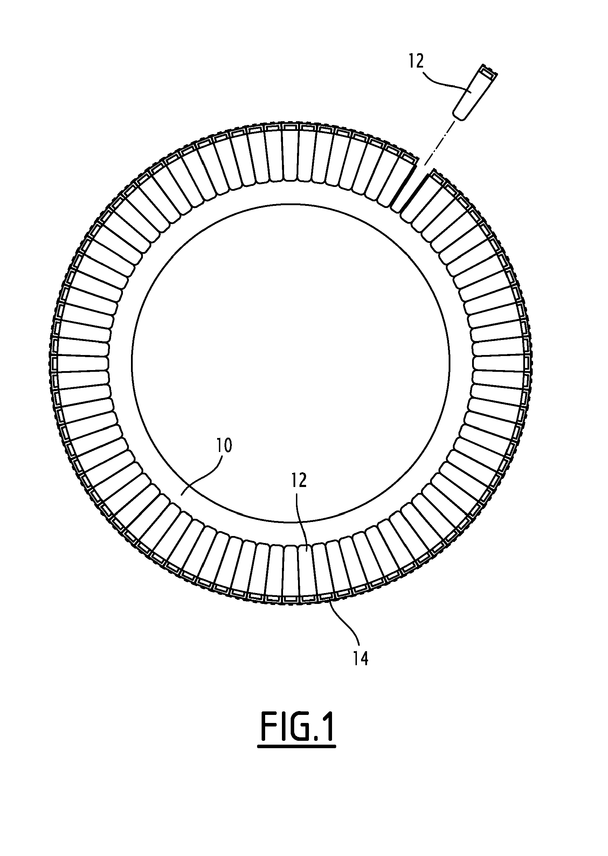

Un rotor 10 d'une machine électrique à flux axial est représenté schématiquement à la figure 1. Comme il a été rappelé ci-dessus, une machine électrique à flux axial est composée d'au moins un rotor en forme de disque apte à tourner autour d'un axe de rotation, et dans ce mode de réalisation, de deux stators circulaires concentriques au rotor qui ne sont pas représentés sur la figure.

Pour le fonctionnement de la machine électrique à flux axial, le rotor 10 est garni d'un ensemble d'éléments magnétiques 12, comportant chacun un ou plusieurs aimants permanents, disposés à intervalles réguliers, dans le plan radial du rotor, selon des rayons du rotor 10.

Le rotor représenté à la figure 10 est garni d'éléments magnétiques 12, préalablement montés, par exemple par insertion dans le plan radial, à intervalles réguliers, à des emplacements prévus à cet effet.

Dans un mode de réalisation, chaque élément magnétique 12 comporte un aimant permanent encapsulé dans un caisson ou capsule de protection, et fixé à l'intérieur de la capsule de protection à l'aide d'un matériau de remplissage, par exemple une résine.

Dans une variante, un élément magnétique 12 est simplement formé d'un aimant permanent.

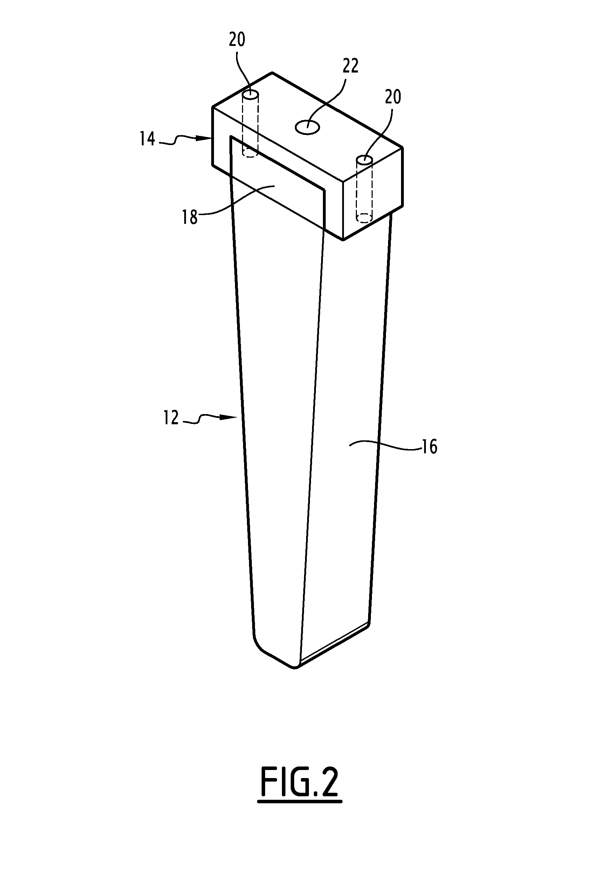

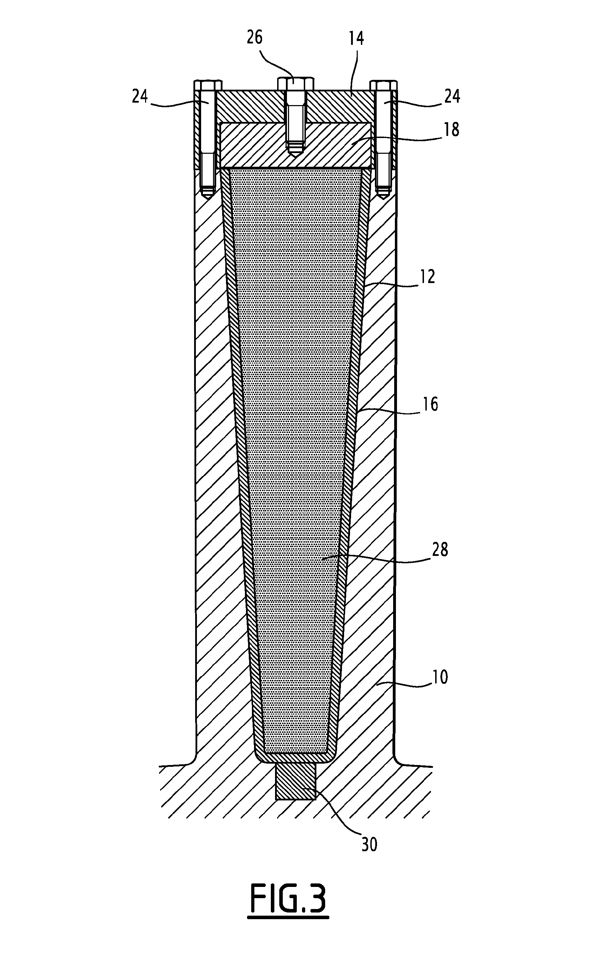

Les éléments magnétiques 12 sont fixés au rotor 10 non pas par fixation directe, mais via un dispositif de fixation 14, tel que représenté plus en détail dans les figures 2 et 3.

La figure 2 illustre en vue de perspective un dispositif de fixation 14 solidaire à un élément magnétique 12.

L'élément magnétique 12 de ce mode de réalisation comporte une capsule de protection trapézoïdale 16 apte à recevoir un ou plusieurs aimants permanents, un élément de fermeture 18 apte à sceller le ou les aimants permanents à l'intérieur de la capsule 16, de manière à protéger les aimants de toute corrosion.

La capsule 16 est de préférence en matériau inoxydable, de manière à protéger le ou les aimants permanents de la corrosion. Plusieurs matières pourraient être utilisables comme l'acier inoxydable, la fibre de verre ou d'autres composites.

Le dispositif de fixation 14 est positionné au contact de l'élément de fermeture 18, de manière à recouvrir sa face située à l'opposé de la face en contact avec la capsule 16. Ainsi, le dispositif de fixation 14 est positionné de manière à fixer l'élément magnétique 12 au rotor 10. Le dispositif de fixation 14 comporte des trous 20 pré-aménagés, chaque trou permettant l'insertion d'un élément mécanique de fixation, par exemple une vis ou une goupille, apte à fixer solidement le dispositif de fixation au rotor 10.

De manière optionnelle le dispositif de fixation 14 comporte également un trou 22 apte à recevoir un autre élément mécanique de fixation ayant pour objet de solidariser le dispositif de fixation 14 à l'élément magnétique 12.

En variante, plusieurs trous 22 sont prévus pour la solidarisation du dispositif de fixation 14 à l'élément magnétique 12.

Ainsi, comme illustré dans la vue de coupe longitudinale de la figure 3, des vis 24 traversant les trous 20 pour venir en prise avec des portions du rotor 10 assurent la fixation du dispositif de fixation 14 au rotor 10, et, du fait du positionnement du dispositif de fixation 14 par rapport à l'élément magnétique 12, la fixation de l'élément magnétique 12 au rotor 10. Les éléments mécaniques de fixation 24 sont assemblés selon la direction radiale de la capsule 16, qui est la direction d'insertion des aimants, de manière à ce que le dispositif de fixation 14 positionne l'élément magnétique 12 en tenaille par rapport au rotor. En effet, au moins sur une portion du dispositif de fixation 14, l'élément magnétique 12 est positionné entre le dispositif de fixation 14 et le rotor 10, ce qui assure la fixation de cet élément magnétique 12 via la fixation du dispositif de fixation 14 au rotor.

Optionnellement, une vis 26 est également utilisée pour solidariser le dispositif de fixation 14 à l'élément magnétique 12. Comme on le voit sur la figure 3, de préférence la vis 26 est en prise simplement avec l'élément de fermeture 18 de la capsule 16 de l'élément magnétique 12, évitant ainsi le contact avec l'aimant permanent 28. Ainsi, aucun usinage n'est effectué directement sur l'aimant permanent.

Optionnellement, un élément mécanique complémentaire de fixation 30 est ajouté, permettant de mieux solidariser la capsule 16 au rotor 10. Dans le mode de réalisation illustré à la figure 3, une goupille 30 centrée par rapport à la capsule 16 est ajoutée sur la face opposée de l'élément magnétique 12 par rapport à la face en contact avec le dispositif de fixation 14. Cette goupille 30 est apte à s'insérer dans un trou usiné dans le rotor 10. Dans un mode de réalisation, l'élément mécanique complémentaire de fixation 30 est intégré dans la capsule 16.

Le dispositif de fixation 14 est, dans le mode de réalisation préféré, une pièce mécanique usinée, présentant une bonne interface mécanique avec le rotor.

De préférence, le matériau utilisé pour la fabrication d'un tel dispositif de fixation 14 est un métal non magnétique ou un matériau composite.

Dans un mode de réalisation alternatif, un dispositif de fixation similaire au dispositif 14 est prévu pour plusieurs éléments magnétiques 12. Selon le principe décrit ci-dessus, le dispositif de fixation est alors placé sur les portions externes des éléments magnétiques 12, de manière à les fixer au rotor lorsqu'il est lui-même solidarisé au rotor via des éléments de fixation mécanique.

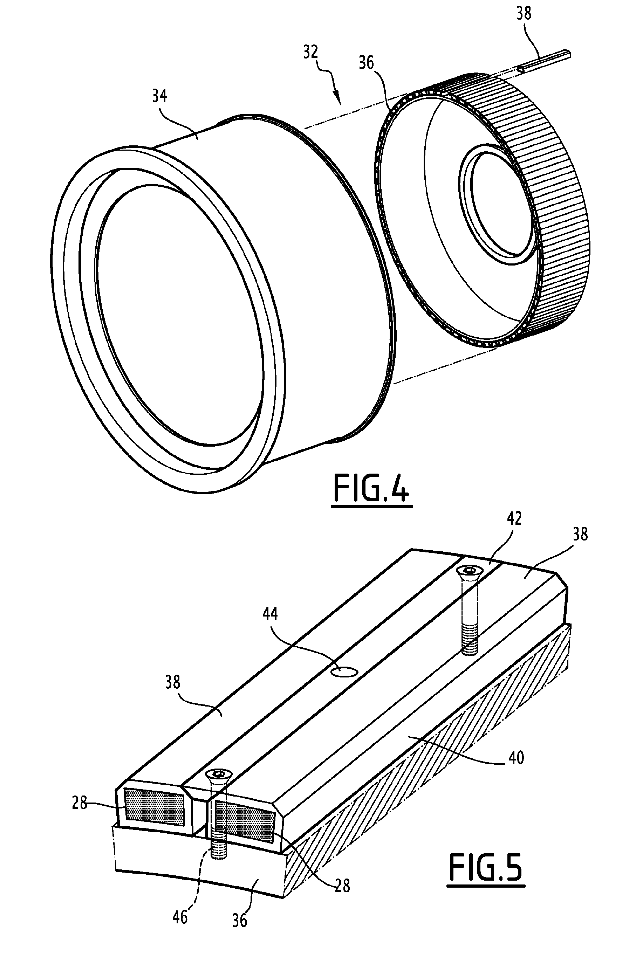

Selon un deuxième mode de réalisation décrit en référence aux figures 4 et 5, un système de fixation utilisant un dispositif de fixation est mis en oeuvre dans une machine électrique à flux radial.

La figure 4 illustre, dans une vue éclatée, une machine électrique à flux radial 32, composée d'un stator 34 en forme de couronne circulaire, à l'intérieur duquel est placé un rotor 36, qu'on garnit d'éléments magnétiques 38 à aimants permanents sur toute la couronne cylindrique, positionnés à intervalles réguliers selon la direction axiale du rotor.

Comme illustré à la figure 5, dans un mode de réalisation chaque élément magnétique 38 est composé d'une capsule ou caisson 40, apte à encapsuler un ou plusieurs aimants permanents 28.

Les éléments magnétiques 38 sont posés sur le rotor 36, et solidarisés à celui-ci grâce à des dispositifs de fixation 42.

Dans le mode de réalisation illustré à la figure 5, un dispositif de fixation 42 est apte à fixer deux éléments magnétiques 38. L'élément de fixation 42 a une forme appropriée pour être positionné en contact sur une portion de la face extérieure de chaque capsule de protection 40 d'un élément magnétique 38. Dans le mode de réalisation illustré, le dispositif de fixation 42 a une forme trapézoïdale en coupe transversale, de manière à épouser la forme des capsules de protection 40 adjacentes.

Le contact entre une face du dispositif de fixation 42 et un élément magnétique 38 est prévu dans ce mode de réalisation sur toute la surface de la face de l'élément magnétique 38 concerné.

En variante, le contact est prévu sur une portion de cette face seulement, étant entendu que la surface de contact est suffisante pour assurer une bonne solidarisation du diapositif de fixation 42 à l'élément magnétique 38, de manière à assurer une fixation de l'élément magnétique 38 au rotor 36.

Bien évidemment, d'autres formes géométriques appropriées sont envisageables.

De plus, le dispositif de fixation 42 comporte des trous pré-aménagés 44 aptes à recevoir chacun un élément de fixation 46, par exemple une vis ou une goupille. Chaque élément de fixation 46 est fixé en prise avec le rotor 36 de manière à assurer la fixation du dispositif de fixation 42 au rotor, et par conséquent la fixation au rotor 36 des éléments magnétiques 38 en contact avec le dispositif de fixation 42.

Dans ce mode de réalisation, le dispositif de fixation 42 est positionné en contact de portions d'éléments magnétiques 38, de manière à assurer une fixation en tenaille desdits éléments magnétiques 38 au rotor, mais sans utilisation d'éléments de fixation directe entre les éléments magnétiques 38 et le dispositif de fixation 42.

En variante, de tels éléments de fixation directe sont ajoutés.

En plus de fixer solidement chaque élément magnétique au rotor, l'utilisation de dispositifs de fixation selon l'invention fournit une bonne rigidité au rotor garni d'aimants permanents, supérieure à la rigidité obtenue par fixation directe sans dispositif de fixation supplémentaire, et donc assure un meilleur fonctionnement et une meilleure résistance à l'usure de la machine électrique dans son ensemble.

## Revendications

1. Système de fixation d'éléments magnétiques (12, 38) dans une machine électrique à aimants permanents comportant au moins un stator et au moins un rotor (10, 36) garni d'une pluralité d'éléments magnétiques (12, 38), un élément magnétique (12, 38) comportant au moins un aimant permanent (28),
**caractérisé en ce qu'il** comporte, pour la fixation d'un élément magnétique (12, 38) au rotor (10, 36), un dispositif de fixation (14, 42) apte à être positionné en contact avec une portion de l'élément magnétique (12, 38) et à être fixé au rotor au moyen d'au moins un élément mécanique de fixation (24, 46), de manière à fixer ledit élément magnétique (12, 38) au rotor (10, 36) lorsque ledit élément mécanique de fixation (24, 46) est en prise avec le rotor (10, 36).

2. Système de fixation selon la revendication 1, **caractérisé en ce que** ledit dispositif de fixation (14, 42) comporte au moins un trou (22, 44) apte à recevoir un dit élément mécanique de fixation (24, 46).

3. Système de fixation selon la revendication 2, **caractérisé en ce que** ledit élément mécanique de fixation (24, 46) est une vis ou une goupille, apte à être insérée dans ledit dispositif de fixation (14, 42) en prise avec le rotor (10,36).

4. Système de fixation selon l'une des revendications précédentes, **caractérisé en ce que** ledit élément magnétique (12, 38) comporte une capsule de protection (16, 40) à l'intérieur de laquelle est disposé au moins un aimant permanent (28).

5. Système de fixation selon la revendication 4, **caractérisé en ce que** ladite capsule de protection (12, 38) comporte en outre un matériau de remplissage apte à fixer le ou les aimants permanents (28).

6. Système de fixation selon l'une des revendications 4 ou 5, dans lequel ladite machine électrique est une machine à flux axial, **caractérisé en ce que** ledit élément magnétique (12) comporte en outre un élément de fermeture (18) apte à sceller ladite capsule de protection (16).

7. Système de fixation selon la revendication 6, **caractérisé en ce que** ledit dispositif de fixation (14) est positionné en contact avec une surface dudit élément de fermeture (18), et **en ce que** ledit dispositif de fixation (14) est en outre fixé audit élément de fermeture (18) par au moins un autre élément mécanique de fixation (26).

8. Système de fixation selon l'une quelconque des revendications précédentes, **caractérisé en ce que** ledit dispositif de fixation (14, 42) est formé de manière à ce qu'une de ses faces soit apte à être positionnée au contact d'au moins une portion d'une face de l'élément magnétique (12, 38).

9. Système de fixation selon la revendication 8, **caractérisé en ce qu'il** comporte en outre un élément mécanique complémentaire de fixation (30), fixé sur une autre face de l'élément magnétique et apte à être positionné en prise avec le rotor (10).

10. Système de fixation selon l'une quelconque des revendications précédentes, **caractérisé en ce que** ledit dispositif de fixation (14, 42) est une pièce métallique usinée.

11. Système de fixation selon l'une quelconque des revendications précédentes, **caractérisé en ce que** ledit dispositif de fixation (14, 42) est en métal non magnétique ou en matériau composite.
